# EUROPÄISCHE PATENTSCHRIFT

(11) **EP 3 326 440 B1**
(45) Veröffentlichungstag und Bekanntmachung des Hinweises auf die Patenterteilung: **24.04.2019**
(21) Anmeldenummer: 17401117.1
(22) Anmeldetag: 16.11.2017
(51) Int. Cl.: A01C 7/10, A01C 17/00, A01C 23/00

(54) **VERFAHREN ZUR ERMITTLUNG VON KALIBRIERPARAMETERN EINER LANDWIRTSCHAFTLICHEN VERTEILMASCHINE**
METHOD FOR DETERMINING CALIBRATION PARAMETERS OF AN AGRICULTURAL SPREADER
PROCÉDÉ DE DÉTERMINATION DE PARAMÈTRES D'ÉTALONNAGE D'UNE MACHINE DE DISTRIBUTION AGRICOLE

(30) Priorität: 29.11.2016 DE 102016122950
(43) Veröffentlichungstag der Anmeldung: 30.05.2018
(73) Patentinhaber: Amazonen-Werke H. Dreyer GmbH & Co. KG, 49205 Hasbergen (DE)
(72) Erfinder: Dreyer, Justus, 49078 Osnabrück (DE); Rahe, Florian, 49504 Lotte (DE); Ströbel-Fröschle, Markus, 49124 Georgsmarienhütte (DE); Wessels, Thomas, 49080 Osnabrück (DE)

(56) Entgegenhaltungen:
- EP-A1- 2 883 436
- EP-A1- 3 241 421
- DE-A1-102008 052 269

## Beschreibung

Die Erfindung betrifft ein Verfahren zur Ermittlung von Kalibrierparametern einer landwirtschaftlichen Verteilmaschine gemäß dem Oberbegriff des Patentanspruchs 1.

Eine Kombination aus zwei Messverfahren zur Ermittlung von Kalibrierparametern einer landwirtschaftlichen Verteilmaschine wird beispielsweise beschrieben in der EP 2 883 436 A1. Diese offenbart eine lineare Anordnung von mit Wiegezellen ausgestatteten Behältern als zweites Messsystem, zur Charakterisierung der Verteilcharakteristik eines Schleuderstreuers, wobei ein erster Behälter in der Nähe des Schleuderstreuers angeordnet ist und jeder weitere Behälter entlang einer vom Schleuderstreuer wegweisenden Geraden angeordnet ist. Zudem offenbart diese Schrift ein an dem Schleuderstreuer angeordnetes erstes Messsystem zur berührungslosen Erfassung des Streufächers des Schleuderstreuers beispielsweise mittels Radarsensoren. Zur Ermittlung der Einstellparameter des Schleuderstreuers ist vorgesehen, das erste Messsystem zunächst für die Einstellung der Einstellparameter des Schleuderstreuers zu verwenden, indem der Streufächer mittels des ersten Messsystems charakterisiert und die Einstellparameter derart gewählt werden, dass das Mengenmaximum des Streufächers oberhalb des linear ausgerichteten zweiten Messsystems liegt. Anschließend wird ein Streuversuch durchgeführt und Messdaten mit dem ersten und zweiten Messsystem zur Ermittlung von Einstellparametern aufgenommen.

Ein Nachteil dieser Vorgehensweise ist, dass bei der Kombination zweier Messprinzipien sehr detaillierte Kenntnisse über die Streucharakteristik des jeweiligen Streugutes und das Streuverhalten des jeweiligen Schleuderstreuers vorliegen müssen. Andernfalls kann es vorkommen, dass zwar das Mengenmaximum richtig lokalisiert, aber die Verteilung innerhalb des Streufächers auf Grund fehlerhafter und/oder unzureichender Modelle falsch ermittelt bzw. berechnet wird. Es ist allerdings bekannt, dass das Streuverhalten von Streugutsorten sehr unterschiedlich ausfallen kann, was bei der oben genannten Vorgehensweise nur mit sehr großem Aufwand, wenn überhaupt berücksichtigt werden kann. Wird dies allerdings bei der Messung nicht berücksichtigt, führt dies zu Abweichungen zwischen den ermittelten und den optimalen Einstellparametern des Schleuderstreuers.

Aufgabe der vorliegenden Erfindung ist es ein Verfahren zur Ermittlung von Kalibrierparametern zu schaffen, dass die Nachteile des Standes der Technik behebt.

Diese Aufgabe wird durch den kennzeichnenden Teil des Anspruchs 1 gelöst und umfasst somit die Verfahrensschritte:
a) Ausbringen von Verteilgut mittels der Verteilmaschine bei vorgegebenen Einstellparametern der Verteilmaschine,
b) Ermittlung von zweiten Messparametern mittels des zweiten Messsystems zur Charakterisierung der Ist-Verteilparameter der Verteilmaschine,
c) Vergleichen der ermittelten Ist-Verteilparameter mit gewünschten Soll-Verteilparametern,
d) Wiederholen der Schritte a) - c) unter Anpassung der Einstellparameter der Verteilmaschine bis die Ist-Verteilparameter mit den Soll-Verteilparametern zumindest annähernd übereinstimmen,
e) Zumindest bei Übereinstimmung der Ist-Verteilparameter mit den Soll-Verteilparametern: Ermitteln von ersten Messparametern mittels des ersten Messsystems und Ermitteln von zumindest einem verteilgutspezifischen Kalibrierfaktor für das erste Messsystem aus einem Abgleich der ersten und zweiten Messparameter.

Es ist somit vorgesehen, dass die Ist-Verteilparameter der Verteilcharakteristik mittels eines zweiten, stationären Messsystems erfasst werden. Die Verteilcharakteristik wird also vollständig oder zumindest soweit wie gewünscht durch das zweite Messsystem charakterisiert. Es werden anschließend falls notwendig die Einstellparameter der Verteilmaschine angepasst und erneut die Verteilcharakteristik der Verteilmaschine mittels des zweiten Messsystems ermittelt und dieses so lange wiederholt, bis eine gewünschte Soll-Verteilcharakteristik charakterisiert durch einen Satz von Soll-Verteilparametern eingestellt ist. Zumindest wenn die gewünschten Soll-Verteilparameter eingestellt sind, werden auch mittels des ersten Messsystems Messdaten erfasst und hieraus zumindest ein Kalibrierparameter bestimmt, welcher die verteilgutspezifischen Verteileigenschaften reflektiert. Das erste Messsystem kann hierbei fortwährend Daten erfassen oder lediglich wenn das zweite Messsystem anzeigt, dass die gewünschten Soll-Verteilparemter und damit die gewünschte Sollverteilcharakteristik eingestellt ist.

Im Unterschied zum Stand der Technik wird somit nicht lediglich ein Teil der Ist-Verteilparameter der Verteilcharakteristik mittels eines zweiten Messsystems und ein anderer Teil der Ist-Verteilparameter der Verteilcharakteristik mittels eines ersten Messsystems bestimmt um Einstellparameter oder Kalibrierparameter zu generieren. Der Grund hierfür ist, dass erkannt wurde, dass für die Kombination von Ist-Verteilparametern eines stationären zweiten Messsystems mit denen eines mobilen, an der Verteilmaschine angeordneten ersten Messsystems typischerweise Rechenmodelle notwendig sind. Mit anderen Worten werden beispielsweise die Ist-Verteilparameter als Messdaten des ersten Messsystems mittels eines Rechenmodells in ein Modell der Verteilcharakteristik konvertiert und entsprechend mit den Ist-Verteilparametern des zweiten, stationären Messsystems kombiniert, um ein komplettes Bild der Verteilcharakteristik zu erhalten. Da die spezifische Verteilcharakteristik und insbesondere auch die Messwerte des ersten Messsystems jedoch in vielen Fällen abhängig von dem jeweiligen Verteilgut ist, kann es bei der Kombination der Ist-Verteilparameter des ersten und zweiten Messsystems zu Fehlern kommen, die vom jeweiligen Verteilgut abhängen.

Eine wesentlich präzisere Möglichkeit Kalibrierparameter eines ersten Messsystems zu generieren, ist mittels eines zweiten, stationären Messsystems die Verteilcharakteristik eines spezifischen Verteilgutes vollständig bzw. in gewünschtem Umfang zu ermitteln und eine Soll-Verteilcharakteristik anhand der zweiten Messparameter einzustellen. Wenn diese Soll-Verteilcharakteristik ermittelt und eingestellt ist, werden mittels des ersten Messsystems, welches zur Anwendung während der Feldarbeit ausgelegt ist, ebenfalls Messparameter aufgenommen, welche die eingestellte Soll-Verteilcharakteristik wiederspiegeln.

Diese ersten Messparameter können als Kalibrierparameter für das erste Messsystem hinsichtlich dieses spezifischen Verteilgutes dienen. Eine Einstellung der Soll-Verteilcharakteristik für das entsprechende Verteilgut anhand des ersten Messsystems ist dann durch Anpassung von Einstellparametern der Verteilmaschine möglich, bis die Messparameter des ersten Messsystems die gewünschte Soll-Verteilcharakteristik anzeigen.

Zur Ermittlung der Kalibrierfaktoren kann ein Vergleich der Messparameter des ersten und zweiten Messsystems dienen, beispielsweise durch Bildung eines Quotienten oder einer Differenz der Messparameter oder anderer aus diesen abgeleiteten Daten. Alternativ kann auch die Soll-Verteilcharakteristik betrachtet und aus diesen die entsprechenden Kalibrierparameter ermittelt werden. So kann beispielsweise mittels des zweiten Messsystems in Form einer linearen Anordnung von Auffangbehältern für einen Schleuderstreuer ermittelt werden, dass die mittlere Wurfweite der jeweiligen Streuscheibe 15 m und der mittlere Abwurfwinkel 10°, gemessen im Uhrzeigersinn entgegen einer imaginären Fahrtrichtung, für eine bestimmtes Verteilgut und einen Satz von Einstellparametern des Schleuderstreuers beträgt. Die Kalibrierparameter des ersten Messsystems können dann aus diesen tatsächlichen Werten für das jeweils verwendete Verteilgut abgeleitet werden.

In einer vorteilhaften Weiterbildung der Erfindung wird der zumindest eine ermittelte verteilgutspezifische Kalibrierfaktor in einer Steuereinheit der landwirtschaftlichen Verteilmaschine hinterlegt und die Verteilparameter der landwirtschaftlichen Verteilmaschine mittels des ersten Messsystems unter Berücksichtigung des zumindest einen Kalibrierfaktors geregelt. Auf diese Weise können vorteilhaft die durch Anwendung des Verfahrens ermittelten Kalibrierfaktoren bei der Feldarbeit durch die Steuereinheit verwendet werden, um die mittels des zweiten, stationären Messsystems eingestellten Verteilparameter zu reproduzieren, oder hiervon abgeleitete, beispielsweise in Menge, Arbeitsbreite usw. angepasste Verteilcharakteristiken einzustellen. Hierfür wird während der Feldarbeit das erste Messsystem, beispielsweise ein Radarmesssystem, welches vorzugsweise an der landwirtschaftlichen Maschine angeordnet, insbesondere angebaut ist, verwendet, um im Rahmen einer durch die Steuereinheit durchgeführten Regelung und unter Verwendung des ermittelten Kalibrierparameters den gewünschten Verteilparameter einzustellen. Dies kann beispielsweise im Rahmen der Regelung unter Anpassung von Einstellparametern der Verteilmaschine, wie Dosiermenge, Aufgabepunkt von Streugut auf eine Streuscheibe Drehzahl einer Pumpe, Drehzahl einer Schleuderscheibe usw. erfolgen. Es können derartige Kalibrierfaktoren für verschiedene Verteilgüter in der Steuereinheit hinterlegt sein.

In einer vorteilhaften Weiterbildung der Erfindung werden die ersten und zweiten Messparameter gleichzeitig ermittelt, so dass bei Einstellung der gewünschten Ist-Verteilparameter direkt die korrespondierenden ersten Messparameter vorliegen und hieraus der oder die Kalibrierfaktoren ermittelt werden können.

In einer vorteilhaften Ausgestaltung der Erfindung wird für jedes auszubringende Verteilgut ein beispielhafter Satz von Soll-Verteilparametern gewählt und für diese zumindest ein Kalibrierfaktor bestimmt und werden für hiervon abweichende Soll-Verteilparameter mittels eines Simulationsverfahrens weitere Kalibrierfaktoren bestimmt und in der Steuereinheit hinterlegt. Die jeweiligen Verteilparameter können für spezifische Verteilgüter jeweils sehr stark variieren. Beispielsweise ist die Verteilcharakteristik beim Düngerstreuer sehr stark von den Rutsch- und insbesondere von den Flugeigenschaften des jeweils verwendeten Streugutes abhängig. Wird nun für einen beispielhaften Satz von Soll-Verteilparametern für ein spezifisches Verteilgut ein bestimmter erster Kalibrierfaktor bestimmt, so berücksichtigt dieser Kalibrierfaktor die spezifischen Materialeigenschaften des Verteilgutes bereits. Für einen anderen Satz von Soll-Parametern kann dann der jeweilige Kalibrierparameter mittels einer Simulation aus dem ersten Kalibrierfaktor zuverlässig ermittelt werden, da die Materialeigenschaften des Streugutes in dem ersten Kalibrierfaktor bereits berücksichtigt sind.

In einer vorteilhaften Weiterbildung der Erfindung werden Einstellparameter, vorzugsweise Öffnungsgrad einer Dosiervorrichtung und/oder Drehzahl einer Dosiervorrichtung und/oder Drehzahl einer Verteilvorrichtung und/oder Drehzahl einer Dosiervorrichtung und/oder Öffnungsgrad eines Ventils, der landwirtschaftlichen Verteilmaschine systematisch verändert, so dass die Verteilparameter solange angepasst werden, bis die zweiten Messparameter gewünschte Soll-Verteilparameter bezüglich eines ausgebrachten Verteilguts anzeigen und die dann vorliegenden ersten Messparameter und/oder die Differenz eines ersten und zweiten Messparameters und/oder der Quotient eines ersten und zweiten Messparameters bezüglich dieses Verteilguts als Kalibrierparameter des ersten Messsystems verwendet werden. Auf diese Weise wird mittels des zweiten Messsystems ein gewünschter Soll-Parametersatz eingestellt und zwar durch systematisches Anpassen der Verteilparameter im Rahmen eines Regelungsvorganges. Nach erfolgreicher Einstellung des Soll-Parametersatzes, wenn also die Ist-Verteilparameter den Soll-Verteilparametern entsprechen, kann nun aus einem Vergleich der zweiten Messparameter mit den ersten Messparametern ein entsprechender Kalibrierparameter ermittelt werden, so dass sich allein durch die Verwendung des ersten Messsystems im Feldeinsatz die gewünschten Soll- Verteilparameter einstellen lassen. Das erste und zweite Messsystem unterscheiden sich hierbei insbesondere dadurch, dass es sich bei dem ersten Messsystem um ein mit der Maschine mitgeführtes, insbesondere an der Maschine angebautes und mit der Steuervorrichtung der landwirtschaftlichen Maschine verbundenes, elektronisches Messsystem handelt, während es sich bei dem zweiten Messsystem um ein stationäres Messsystem, insbesondere beim Hersteller der landwirtschaftlichen Maschine handelt.

In einer möglichen Weiterbildung der Erfindung werden die für eine Verteilmaschine ermittelten Kalibrierparameter für andere Verteilmaschinen gleichen Typs übernommen. Es muss also nicht für jede Verteilmaschine individuell ein Kalibrierfaktor bestimmt werden. Insbesondere kann auch vorgesehen sein, für Verteilmaschinen unterschiedlicher Bauart, bei denen jedoch die die Verteilcharakteristik bestimmenden Bauteile, beispielsweise Streuscheiben beim Düngerstreuer, und auch das erste Messsystem, beispielsweise Radarsensoren zur Überwachung der Verteilcharakteristik beim Düngerstreuer, identisch ist, dieselben Kalibrierfaktoren zu verwenden.

In einer möglichen Ausgestaltung der Erfindung wird das Verfahren auf einen Düngerstreuer angewendet, wobei der Düngerstreuer über einen regelbaren Antrieb zur Anpassung der Drehzahl von Schleuderscheiben und/oder einen regelbaren Dosierschieber zur Anpassung einer Dosieröffnung zur Veränderung der Ausbringmenge und/oder eine Vorrichtung zur Anpassung des Ortes der Aufgabe des Verteilguts auf die Schleuderscheibe verfügt, wobei das erste Messsystem Sensoren, insbesondere Radarsensoren, zur Bestimmung der Verteilcharakteristik und/oder Ausbringmenge und/oder Wurfweite des Streugutes und/oder Drehmomentsensoren zur Bestimmung der Ausbringmenge des Streugutes umfasst und das zweite Messsystem mehrere stationäre Messgefäße, vorzugsweise kombiniert mit Wiegevorrichtungen, zur Ermittlung der tatsächlichen Ausbringmenge umfasst und wobei die Kalibrierparameter die ersten Messparameter und/oder zweiten Messparameter bezüglich einer Düngersorte und/oder zumindest einen anhand der zweiten Messparameter eingestellten Einstellparameter der Verteilmaschine, wie vorzugsweise die Einstellung der Drehzahl der Schleuderscheiben und/oder die Einstellung der Dosieröffnung des Dosierschiebers und/oder die Einstellung des Ortes des Aufgabepunktes des Verteilguts auf die Schleuderscheibe, umfassen. Es ist also bei einem Düngerstreuer vorgesehen, ein zweites, stationäres Messsystem insbesondere in einer Streuhalle, bei dem die Ausbringmenge ortsaufgelöst ermittelt werden kann, zu kombinieren mit einem ersten, mit dem Düngerstreuer mitgeführten Messsystem, beispielsweise Radarsensoren zur Bestimmung der Verteilcharakteristik oder Drehmomentsensoren zur Erfassung des Antriebsdrehmomentes der Schleuderscheiben und somit Ermittlung der Ausbringmenge der Schleuderscheiben.

Der Kalibrierfaktor umfasst hierbei die ersten und/oder zweiten Messparameter bezüglich der jeweils charakterisierten Düngersorte und/oder einen Einstellparameter der Maschine welcher anhand der zweiten Messparameter eingestellt wurde. Es kann beispielsweise vorgesehen sein, dass ein spezifisches Streugut mit einer vorgegebenen, ersten Verteilcharakteristik ausgebracht werden soll, beispielsweise mit einer vorgegeben Menge, Arbeitsbreite und Wurfweite. Es werden nun die Einstellparameter und damit die Ist-Verteilparameter anhand der zweiten Messparameter so lange verändert bis die gewünschte, erste Verteilcharakteristik also die gewünschten Soll-Parameter eingestellt sind. Ein oder mehrere Einstellparameter, welche für die Einstellung der ersten Verteilcharakteristik eingestellt wurden, beispielsweise Drehzahl und/oder Dosierschieberöffnung und/oder Position des Aufgabepunktes des Düngers auf die Schleuderscheibe können nun als Kalibrierfaktoren in dem Steuergerät der landwirtschaftlichen Maschine hinterlegt werden. Damit ist bekannt welche Einstellparameter für eine spezifische Düngersorte für die Einstellung der ersten Verteilcharakteristik zu wählen sind. Es wird zudem als Kalibrierparameter zumindest ein Messparameter des ersten Messsystems abgelegt, so dass bei der Feldarbeit die erste Verteilcharakteristik anhand der Messparameter des ersten Messsystems erneut eingestellt werden kann. Auf derartige Weise lassen sich Kalibrierfaktoren für verschiedene Streugüter ermitteln und die erste Verteilcharakteristik bei der Feldarbeit für das jeweils verwendete Streugut anhand der Messparameter des ersten Messsystems reproduzieren. Abweichende, zweite Verteilcharakteristiken können für das jeweils verwendete Streugut mittels Simulationen und Berechnungsvorschriften aus dem oder den für den jeweils verwendeten Dünger hinterlegten Kalibrierfaktoren eingestellt werden, indem die für diese Verteilcharakteristik zu erwartenden ersten Messparameter des ersten Messsystems berechnet werden.

Eine ähnliche Vorgehensweise ist auch bei einer Sämaschine denkbar, wobei die Sämaschine über ein erstes Messsystem in Form zumindest eines vorzugsweise optischen oder piezoelektrischen Saatgutsensors verfügt und das zweite Messsystem ein System zur Ermittlung der Menge, insbesondere der Masse, und/oder der Ausbringrate an ausgebrachtem Saatgut umfasst und wobei der zumindest eine Kalibrierparameter bezüglich eines spezifischen Saatgutes durch einen Abgleich zwischen den Messparametern des ersten Messsystems und den Messparametern des zweiten Messsystems bei einer eingestellten Soll-Ausbringmenge und/oder Soll-Ausbringrate ermittelt wird. Auch hierbei hängen die jeweils ermittelten Messparameter stark von dem verwendeten Saatgut ab, so dass die Bestimmung von Kalibrierfaktoren für das jeweils verwendete Saatgut eine Einstellung von gewünschten Soll-Verteilparametern bei der Feldarbeit in Abhängigkeit des verwendeten Saatgutes erst möglich macht.

Analog ist das Verfahren ebenfalls bei einer Feldspritze anwendbar, wobei die Feldspritze über ein erstes Messsystem in Form zumindest eines Durchflusssensors verfügt, wobei mittels eines zweiten Messsystems zur Bestimmung der tatsächlich ausgebrachten Masse und oder des tatsächlich ausgebrachten Volumens, zumindest ein spritzmittelabhängiger und/oder konzentrationsabhängiger Kalibrierparameter zur Einstellung des für ein gewünschtes Fördervolumen notwendigen Förderdrucks, vorzugsweise Drehzahl einer Dosierpumpe und/oder Öffnungsgrad eines Ventils, durch einen Abgleich zwischen den Messparametern des ersten Messsystems und den Messparametern des zweiten Messsystems bei einer eingestellten Soll-Ausbringmenge und/oder einem eingestellten Soll-Fördervolumen ermittelt wird. Es soll also in Abhängigkeit des verwendeten Spritzmittels, der jeweiligen Viskosität oder Konzentration ein Kalibrierfaktor bestimmt werden, so dass für das jeweils verwendete Spritzmittel bzw. Konzentration gewünschte Soll-Verteilparameter in reproduzierbarer Weise anhand der ersten Messparameter bei der Feldarbeit eingestellt werden können.

## Patentansprüche

1. Verfahren zur Ermittlung von Kalibrierparametern einer landwirtschaftlichen Verteilmaschine, wobei die landwirtschaftliche Verteilmaschine mit einem ersten Messsystem zur Ermittlung von ersten Messparametern zur Überwachung von zumindest einem Verteilparameter der Verteilmaschine, vorzugsweise Ausbringmenge und/oder Verteilcharakteristik, zur Anwendung während der Feldarbeit ausgestattet ist, wobei die Verteilmaschine zur Ausbringung verschiedener Verteilgüter, vorzugsweise verschiedener Düngersorten und/oder verschiedener Saatgüter und/oder Spritzmittel, ausgelegt ist und wobei ein zweites stationäres Messsystem zur Ermittlung von zweiten Messparametern zur Überwachung von zumindest einem Verteilparameter der Verteilmaschine vorgesehen ist, insbesondere beim Hersteller der Verteilmaschine,
**gekennzeichnet durch,** die Verfahrensschritte:
a) Ausbringen von Verteilgut mittels der Verteilmaschine bei vorgegebenen Einstellparametern der Verteilmaschine,
b) Ermittlung von zweiten Messparametern mittels des zweiten Messsystems zur Charakterisierung der Ist-Verteilparameter der Verteilmaschine,
c) Vergleichen der ermittelten Ist-Verteilparameter mit gewünschten Soll-Verteilparametern,
d) Wiederholen der Schritte a) - c) unter Anpassung der Einstellparameter der Verteilmaschine bis die Ist-Verteilparameter mit den Soll-Verteilparametern zumindest annähernd übereinstimmen,
e) Zumindest bei Übereinstimmung der Ist-Verteilparameter mit den Soll-Verteilparametern: Ermitteln von ersten Messparametern mittels des ersten Messsystems und Ermitteln von zumindest einem verteilgutspezifischen Kalibrierparameter für das erste Messsystem aus einem Abgleich der ersten und zweiten Messparameter und/oder aus den ersten Messparametern unter Berücksichtigung der eingestellten Soll-Verteilcharakteristik.

2. Verfahren nach Anspruch 1, **gekennzeichnet durch** das Hinterlegen des zumindest einen ermittelten verteilgutspezifischen Kalibrierparameter in einer Steuereinheit der landwirtschaftlichen Verteilmaschine und Regelung der Verteilparameter der landwirtschaftlichen Verteilmaschine mittels des ersten Messsystems unter Berücksichtigung des zumindest einen Kalibrierparameters.

3. Verfahren nach Anspruch 1 oder 2, **gekennzeichnet durch** das gleichzeitige Ermitteln erster und zweiter Messparameter.

4. Verfahren nach Anspruch 2 oder 3, **dadurch gekennzeichnet, dass** für jedes auszubringende Verteilgut ein beispielhafter Satz von Soll-Verteilparametern gewählt und für diese zumindest ein Kalibrierparameter bestimmt wird und wobei für hiervon abweichende Soll-Verteilparameter mittels eines Simulationsverfahrens weitere Kalibrierparameter bestimmt und in der Steuereinheit hinterlegt werden.

5. Verfahren nach zumindest einem der vorhergehenden Ansprüche, **gekennzeichnet durch** das systematische Verändern von Einstellparametern, vorzugsweise Öffnungsgrad einer Dosiervorrichtung und/oder Drehzahl einer Dosiervorrichtung und/oder Drehzahl einer Verteilvorrichtung und/oder Drehzahl einer Dosiervorrichtung und/oder Öffnungsgrad eines Ventils, der landwirtschaftlichen Verteilmaschine, so dass die Verteilparameter solange angepasst werden, bis die zweiten Messparameter gewünschte Soll-Verteilparameter bezüglich eines ausgebrachten Verteilguts anzeigen und die dann vorliegenden ersten Messparameter und/oder die Differenz eines ersten und zweiten Messparameters und/oder der Quotient eines ersten und zweiten Messparameters bezüglich dieses Verteilguts als Kalibrierparameter des ersten Messsystems verwendet werden.

6. Verfahren nach zumindest einem der vorhergehenden Ansprüche, **dadurch gekennzeichnet, dass** die für eine Verteilmaschine ermittelten Kalibrierparameter für andere Verteilmaschinen gleichen Typs übernommen werden.

7. Verfahren nach zumindest einem der vorhergehenden Ansprüche, **dadurch gekennzeichnet, dass** das Verfahren auf einen Düngerstreuer angewendet wird, wobei der Düngerstreuer über einen regelbaren Antrieb zur Anpassung der Drehzahl von Schleuderscheiben und/oder einen regelbaren Dosierschieber zur Anpassung einer Dosieröffnung zur Veränderung der Ausbringmenge und/oder eine Vorrichtung zur Anpassung des Ortes der Aufgabe des Verteilguts auf die Schleuderscheibe verfügt, wobei das erste Messsystem Sensoren, insbesondere Radarsensoren, zur Bestimmung der Verteilcharakteristik und/oder Ausbringmenge und/oder Wurfweite des Streugutes und/oder Drehmomentsensoren zur Bestimmung der Ausbringmenge des Streugutes umfasst und das zweite Messsystem mehrere stationäre Messgefäße, vorzugsweise kombiniert mit Wiegevorrichtungen, zur Ermittlung der tatsächlichen Ausbringmenge umfasst und wobei die Kalibrierparameter die ersten Messparameter und/oder zweiten Messparameter bezüglich einer Düngersorte und/oder zumindest einen anhand der zweiten Messparameter eingestellten Einstellparameter der Verteilmaschine, wie vorzugsweise die Einstellung der Drehzahl der Schleuderscheiben und/oder die Einstellung der Dosieröffnung des Dosierschiebers und/oder die Einstellung des Ortes des Aufgabepunktes des Verteilguts auf die Schleuderscheibe, umfassen.

8. Verfahren nach zumindest einem der Ansprüche 1-6, **dadurch gekennzeichnet, dass** das Verfahren auf eine Sämaschine angewendet wird, wobei die Sämaschine über ein erstes Messsystem in Form zumindest eines vorzugsweise optischen oder piezoelektrischen Saatgutsensors verfügt und das zweite Messsystem ein System zur Ermittlung der Menge, insbesondere der Masse, und/oder der Ausbringrate an ausgebrachtem Saatgut umfasst und wobei der zumindest eine Kalibrierparameter bezüglich eines spezifischen Saatgutes durch einen Abgleich zwischen den Messparametern des ersten Messsystems und den Messparametern des zweiten Messsystems bei einer eingestellten Soll-Ausbringmenge und/oder Soll-Ausbringrate ermittelt wird.

9. Verfahren nach zumindest einem der Ansprüche 1-6, **dadurch gekennzeichnet, dass** das Verfahren auf eine Feldspritze angewendet wird, wobei die Feldspritze über ein erstes Messsystem in Form zumindest eines Durchflusssensors verfügt, wobei mittels eines zweiten Messsystems zur Bestimmung der tatsächlich ausgebrachten Masse und oder des tatsächlich ausgebrachten Volumens, zumindest ein spritzmittelabhängiger und/oder konzentrationsabhängiger Kalibrierparameter zur Einstellung des für ein gewüschtes Fördervolumen notwendigen Förderdrucks, vorzusgweise Drehzahl einer Dosierpumpe und/oder Öffnungsgrad eines Ventils, durch einen Abgleich zwischen den Messparametern des ersten Messsystems und den Messparametern des zweiten Messsystems bei einer eingestellten Soll-Ausbringmenge und/oder einem eingestellten Soll-Fördervolumen ermittelt wird.

## Claims

1. Method for determining calibration parameters of an agricultural spreading machine, wherein the agricultural spreading machine is equipped with a first measuring system for determining first measurement parameters for monitoring at least one spreading parameter of the spreading machine, preferably discharge quantity and/or spreading characteristic, for use during field work, wherein the spreading machine is configured to discharge various spreading materials, for example various types of fertilizer and/or various seeds and/or sprays, and wherein a second fixed measuring system is provided for determining second measurement parameters for monitoring at least one spreading parameter of the spreading machine, in particular at the manufacturer of the spreading machine,
**characterized by** the method steps:
a) discharging spreading material by means of the spreading machine with predefined setting parameters of the spreading machine,
b) determining second measurement parameters by means of the second measuring system for characterizing the actual spreading parameters of the spreading machine,
c) comparing the determined actual spreading parameters with desired target spreading parameters,
d) repeating steps a)-c) while adapting the setting parameters of the spreading machine until the actual spreading parameters at least approximately correspond to the target spreading parameters,
e) at least when the actual spreading parameters correspond to the target spreading parameters: determining first measurement parameters by means of the first measuring system and determining at least one calibration parameter, which is specific to a spreading material, for the first measuring system from a comparison of the first and second measurement parameters and/or from the first measurement parameters while taking into account the target spreading characteristic which has been set.

2. Method according to Claim 1, **characterized by** the storage of the at least one determined calibration parameter, which is specific to a spreading material, in a control unit of the agricultural spreading machine and regulation of the spreading parameters of the agricultural spreading machine by means of the first measuring system while taking into account the at least one calibration parameter.

3. Method according to Claim 1 or 2, **characterized by** the simultaneous determination of first and second measurement parameters.

4. Method according to Claim 2 or 3, **characterized in that** an exemplary set of target spreading parameters is selected for each spreading material which is to be discharged, and at least one calibration parameter is determined for these spreading parameters, and wherein further calibration parameters are determined for target spreading parameters which differ therefrom, by means of a simulation method, and are stored in the control unit.

5. Method according to at least one of the preceding claims, **characterized by** the systematic changing of setting parameters, preferably the degree of opening of a metering device and/or rotational speed of a metering device and/or rotational speed of a spreading device and/or rotational speed of a metering device and/or degree of opening of a valve, of the agricultural spreading machine, with the result that the spreading parameters are adapted until the second measurement parameters indicate desired target spreading parameters with respect to a discharged spreading material, and the first measurement parameters which are then present and/or the difference between a first and second measurement parameter and/or the quotient of a first and second measurement parameter with respect to this spreading material are used as calibration parameters of the first measuring system.

6. Method according to at least one of the preceding claims, **characterized in that** the calibration parameters which are determined for a spreading machine are adopted for other spreading machines of the same type.

7. Method according to at least one of the preceding claims, **characterized in that** the method is applied to a fertilizer distributor, wherein the fertilizer distributor has a controllable drive for adapting the rotational speed of centrifugal discs and/or a controllable metering slider for adapting a metering opening for changing the discharge quantity and/or a device for adapting the location of the application of the spreading material onto the centrifugal disc, wherein the first measuring system comprises sensors, in particular radar sensors, for determining the spreading characteristic and/or discharge quantity and/or throwing range of the material to be distributed and/or torque sensors for determining the discharge quantity of the material to be distributed, and the second measuring system comprises a plurality of fixed measuring vessels, preferably combined with weighing devices, for determining the actual discharge quantity, and wherein the calibration parameters comprise the first measurement parameters and/or second measurement parameters with respect to a type of fertilizer and/or at least one setting parameter, set on the basis of the second measurement parameters, of the spreading machine, such as preferably the setting of the rotational speed of the centrifugal discs and/or the setting of the metering opening of the metering slider and/or the setting of the location of the point at which the spreading material is applied to the centrifugal disc.

8. Method according to at least one of Claims 1-6, **characterized in that** the method is applied to a sowing machine, wherein the sowing machine has a first measuring system in the form of at least one, preferably optical or piezoelectric, seed sensor, and the second measuring system comprises a system for determining the quantity, in particular the mass, and/or the discharge rate of discharged seed, and wherein the at least one calibration parameter with respect to a specific seed is determined by comparing the measuring parameters of the first measurement system and the measurement parameters of the second measuring system for a target discharge quantity which has been set and/or target discharge rate.

9. Method according to at least one of Claims 1-6, **characterized in that** the method is applied to a field sprayer, wherein the field sprayer has a first measuring system in the form of at least one flow sensor, wherein, by means of a second measuring system for determining the actually discharged mass and/or the actually discharged volume, at least one spray-dependent and/or concentration-dependent calibration parameter for setting the delivery pressure which is necessary for a desired delivery volume, preferably the rotational speed of a metering pump and/or the degree of opening of a valve, are/is determined by carrying out a comparison between the measurement parameters of the first measuring system and the measurement parameters of the second measuring system for a target discharge quantity which has been set and/or a target delivery volume which has been set.

## Revendications

1. Procédé de détermination de paramètres d'étalonnage d'une machine de distribution agricole, dans lequel la machine de distribution agricole est équipée d'un premier système de mesure destiné à déterminer des premiers paramètres de mesure pour surveiller au moins un paramètre de distribution de la machine de distribution, de préférence le débit d'épandage et/ou la caractéristique de distribution, devant être utilisés pendant le travail sur le terrain, dans lequel la machine de distribution est conçue pour épandre différents produits d'épandage, de préférence différents types d'engrais et/ou différentes semences et/ou différents agents de pulvérisation et dans lequel il est prévu un second système de mesure stationnaire destiné à déterminer des seconds paramètres de mesure pour surveiller au moins un paramètre de distribution de la machine de distribution, en particulier chez le fabricant de la machine de distribution,
**caractérisé par** les étapes de procédé consistant à :
a) épandre un produit à distribuer au moyen de la machine de distribution pour des paramètres de réglage prédéfinis de la machine de distribution,
b) déterminer des seconds paramètres de mesure au moyen du second système de mesure pour caractériser les paramètres de distribution réels de la machine de distribution,
c) comparer les paramètres de distribution réels déterminés à des paramètres de distribution nominaux souhaités,
d) répéter les étapes a) à c) tout en adaptant les paramètres de réglage de la machine de distribution jusqu'à ce que les paramètres de distribution réels coïncident au moins approximativement avec les paramètres de distribution nominaux,
e) au moins dans le cas où les paramètres de distribution réels coïncident avec les paramètres de distribution nominaux :
déterminer des premiers paramètres de mesure au moyen du premier système de mesure et déterminer au moins un paramètre d'étalonnage spécifique du produit à distribuer pour le premier système de mesure à partir d'un ajustement des premier et second paramètres de mesure et/ou à partir des premiers paramètres de mesure en tenant compte de la caractéristique de distribution nominale réglée.

2. Procédé selon la revendication 1, **caractérisé par** le stockage dudit au moins un paramètre d'étalonnage spécifique du produit à distribuer déterminé dans une unité de commande de la machine de distribution agricole et par la régulation des paramètres de distribution de la machine de distribution agricole au moyen du premier système de mesure en tenant compte dudit au moins paramètre d'étalonnage.

3. Procédé selon la revendication 1 ou 2, **caractérisé par** la détermination simultanée de premiers et seconds paramètres de mesure.

4. Procédé selon la revendication 2 ou 3, **caractérisé en ce qu'**un exemple de jeu de paramètres de distribution nominaux est sélectionné pour chaque produit à distribuer et **en ce qu'**il est déterminé pour ledit au moins paramètre d'étalonnage et dans lequel d'autres paramètres d'étalonnage sont déterminés au moyen d'un procédé de simulation et sont stockés dans l'unité de commande pour des paramètres de distribution nominaux différents de ceux-ci.

5. Procédé selon au moins l'une des revendications précédentes, **caractérisé par** la modification systématique de paramètres de réglage, de préférence le degré d'ouverture d'un dispositif de dosage et/ou la vitesse de rotation du dispositif de dosage et/ou la vitesse de rotation d'un dispositif de distribution et/ou la vitesse de rotation d'un dispositif de dosage et/ou le degré d'ouverture d'une vanne, de la machine de distribution agricole, de manière à ce que les paramètres de distribution soient adaptés jusqu'à ce que les seconds paramètres de mesure indiquent des paramètres de distribution nominaux souhaités par rapport à un produit à distribuer épandu et à ce que les premiers paramètres de mesure alors présents et/ou la différence entre des premier et second paramètres de mesure et/ou le quotient entre des premier et second paramètres de mesure par rapport audit produit à distribuer soient utilisés en tant que paramètres d'étalonnage du premier système de mesure.

6. Procédé selon au moins l'une des revendications précédentes, **caractérisé en ce que** les paramètres d'étalonnage déterminés pour une machine de distribution sont adoptés pour d'autres machines de distribution du même type.

7. Procédé selon au moins l'une des revendications précédentes, **caractérisé en ce que** le procédé est appliqué à un épandeur d'engrais, dans lequel l'épandeur d'engrais est équipé d'un mécanisme d'entraînement réglable permettant d'adapter la vitesse de rotation de disques centrifuges et/ou d'un tiroir doseur réglable destiné à adapter une ouverture de dosage afin de modifier le débit d'épandage et/ou d'un dispositif destiné à adapter le point d'épandage du produit à distribuer sur le disque centrifuge,
dans lequel le premier système de mesure comprend des capteurs, en particulier des capteurs radars, destinés à déterminer la caractéristique de distribution et/ou le débit d'épandage et/ou la distance de projection du produit à distribuer et/ou des capteurs de couple destiné à déterminer le débit d'épandage du produit à épandre, et dans lequel le second système de mesure comprend une pluralité de récipients de mesure fixes, de préférence combinés à des dispositifs de pesage, pour déterminer le débit d'épandage réel, et dans lequel les paramètres d'étalonnage comprennent les premiers paramètres de mesure et/ou les seconds paramètres de mesure par rapport à un type d'engrais et/ou au moins un paramètre de réglage de la machine de distribution qui est réglé sur la base des seconds paramètres de mesure, comme de préférence le réglage de la vitesse de rotation des disques centrifuges et/ou le réglage de l'ouverture de dosage du tiroir doseur et/ou le réglage de la position du point d'épandage du produit à distribuer sur le disque centrifuge.

8. Procédé selon au moins l'une des revendications 1 à 6, **caractérisé en ce que** le procédé est appliqué à une machine à semer, dans lequel la machine à semer comprend un premier système de mesure sous la forme d'au moins un capteur de semence, de préférence optique ou piézoélectrique, et **en ce que** le second système de mesure comprend un système destiné à déterminer la quantité, en particulier la masse, et/ou le taux d'épandage des semences épandues et dans lequel ledit au moins un paramètre d'étalonnage est déterminé par rapport à une semence spécifique au moyen d'un ajustement entre les paramètres de mesure du premier système de mesure et les paramètres de mesure du second système de mesure pour une quantité d'épandage nominale et/ou un débit d'épandage nominal réglés.

9. Procédé selon au moins l'une des revendications 1 à 6, **caractérisé en ce que** le procédé est appliqué à un pulvérisateur agricole, dans lequel le pulvérisateur agricole est doté d'un premier système de mesure sous la forme d'au moins un capteur de débit, dans lequel au moins un paramètre d'étalonnage dépendant de l'agent de pulvérisation et/ou de la concentration est déterminé au moyen d'un second système de mesure destiné à déterminer la masse épandue réelle et/ou le volume épandu réel, pour régler la pression de refoulement nécessaire pour un volume de refoulement souhaité, de préférence la vitesse de rotation d'une pompe doseuse et/ou le degré d'ouverture d'une vanne, au moyen d'un ajustement entre les paramètres de mesure du premier système de mesure et les paramètres de mesure du second système de mesure pour une quantité d'épandage nominale réglée et/ou un volume de refoulement nominal réglé.
